# EUROPEAN PATENT APPLICATION

(11) **EP 4 362 155 A1**
(43) Date of publication of application: **01.05.2024**
(21) Application number: 22828061.6
(22) Date of filing: 19.04.2022
(51) Int. Cl.: H01M 10/052, H01M 4/64, H01M 10/0562, H01M 10/0585, H01M 50/586, H01M 50/591

(54) **BATTERY**

(30) Priority: 24.06.2021 JP 2021104756
(71) Applicant: Panasonic Intellectual Property Management Co., Ltd., Osaka-shi, Osaka 540-6207 (JP)
(72) Inventor: KOSHIZUKA Tsutomu, Tokyo 103-0022 (JP); MORIOKA Kazuhiro, Tokyo 103-0022 (JP); HONDA Kazuyoshi, Tokyo 103-0022 (JP)
(74) Representative: Grünecker Patent- und Rechtsanwälte PartG mbB
(86) International application number: PCT/JP2022/018146
(87) International publication number: WO 2022/270142

(57) **Abstract**

A battery includes an electrode collector, two electrode active material layers disposed on both principal surfaces of the electrode collector, two solid electrolyte layers each disposed on a side of a corresponding one of the two electrode active material layers that is disposed on the opposite side of the electrode collector, two counter-electrode active material layers each disposed on a side of a corresponding one of the two solid electrolyte layers that is disposed on the opposite side of the corresponding one of the two electrode active material layers, two counter-electrode collectors each disposed on a side of a corresponding one of the two counter-electrode active material layers that is disposed on the opposite side of the corresponding one of the two solid electrolyte layers, and a first insulating layer that covers side surfaces of the two counter-electrode collectors, the two counter-electrode active material layers, the two solid electrolyte layers, and the two electrode active material layers. A first region not covered with any of the two electrode active material layers is provided at ends of both principal surfaces of the electrode collector. A second region not covered with any of the two counter-electrode collectors is provided at an end of a principal surface of each of the two counter-electrode active material layers that faces toward a corresponding one of the counter-electrode collectors. The first insulating layer covers the second region. The electrode collector projects from an outer surface of the first insulating layer.

## Description

### Technical Field

The present disclosure relates to a battery.

### Background Art

PTL 1 and PTL 2 each disclose a battery including an insulating member.

### Citation List

### Patent Literature

PTL 1: Japanese Unexamined Patent Application Publication No. 2015-233003
PTL 2: Japanese Unexamined Patent Application Publication No. 2020-13729

### Summary of Invention

### Technical Problem

The conventional technology is required to improve the reliability of a battery. For this purpose, the present disclosure has as an object to provide a highly reliable battery. Solution to Problem

A battery according to an aspect of the present disclosure includes an electrode collector, two electrode active material layers disposed on both principal surfaces of the electrode collector, two solid electrolyte layers each disposed on a side of a corresponding one of the two electrode active material layers that is disposed on the opposite side of the electrode collector, two counter-electrode active material layers each disposed on a side of a corresponding one of the two solid electrolyte layers that is disposed on the opposite side of the corresponding one of the two electrode active material layers, two counter-electrode collectors each disposed on a side of a corresponding one of the two counter-electrode active material layers that is disposed on the opposite side of the corresponding one of the two solid electrolyte layers, and a first insulating layer that covers side surfaces of the two counter-electrode collectors, the two counter-electrode active material layers, the two solid electrolyte layers, and the two electrode active material layers. A first region not covered with any of the two electrode active material layers is provided at ends of both principal surfaces of the electrode collector. A second region not covered with any of the two counter-electrode collectors is provided at an end of a principal surface of each of the two counter-electrode active material layers that faces toward a corresponding one of the counter-electrode collectors. The first insulating layer covers the second region. The electrode collector projects from an outer surface of the first insulating layer. Advantageous Effects of Invention

The present disclosure makes it possible to provide a highly reliable battery.

### Brief Description of Drawings

[Fig. 1] Fig. 1 is a schematic top view showing an example of a battery according to Embodiment 1.
[Fig. 2] Fig. 2 is a schematic cross-sectional view of the battery according to Embodiment 1 as taken along line II-II in Fig. 1.
[Fig. 3] Fig. 3 is a schematic cross-sectional view of a battery according to Modification 1 of Embodiment 1.
[Fig. 4] Fig. 4 is a schematic top view of a battery according to Modification 2 of Embodiment 1.
[Fig. 5] Fig. 5 is a schematic cross-sectional view of the battery according to Modification 2 of Embodiment 1 as taken along line V-V in Fig. 4.
[Fig. 6] Fig. 6 is a flow chart showing a method for manufacturing a battery according to Embodiment 1.
[Fig. 7] Fig. 7 is a schematic cross-sectional view showing an example of a battery according to Embodiment 2.
[Fig. 8A] Fig. 8A is a flow chart showing an example of a method for manufacturing a battery according to Embodiment 2.
[Fig. 8B] Fig. 8B is a flow chart showing another example of a method for manufacturing a battery according to Embodiment 2.

### Description of Embodiments

### (Brief Overview of the Present Disclosure)

In order to take a current out of a battery, such as an all-solid battery, including solid electrolyte layers each containing a solid electrolyte, the inventor studied to form terminals at ends of the battery. Specifically, in a case where electrode active material layers are formed on both surfaces of an identical electrode collector, the inventor attempted to form terminals in regions provided at ends of the electrode collector and not covered with the electrode active material layers.

In this case, the inventor found that an end face short circuit due to contact with the electrode collector tends to occur when counter-electrode collectors project further than counter-electrode active material layers. Further, in a case where a plurality of unit cells are laminated, a misalignment between the cells thus laminated undesirably increases the likelihood of an end face short circuit. Further, in a case where ends of the active material layers are exposed, the falling off of active materials undesirably makes it easy for a short circuit to occur. Such problems cause a deterioration in reliability of the battery.

To address these problems, the present disclosure provides a highly reliable battery.

A battery according to an aspect of the present disclosure includes an electrode collector, two electrode active material layers disposed on both principal surfaces of the electrode collector, two solid electrolyte layers each disposed on a side of a corresponding one of the two electrode active material layers that is disposed on the opposite side of the electrode collector, two counter-electrode active material layers each disposed on a side of a corresponding one of the two solid electrolyte layers that is disposed on the opposite side of the corresponding one of the two electrode active material layers, two counter-electrode collectors each disposed on a side of a corresponding one of the two counter-electrode active material layers that is disposed on the opposite side of the corresponding one of the two solid electrolyte layers, and a first insulating layer that covers side surfaces of the two counter-electrode collectors, the two counter-electrode active material layers, the two solid electrolyte layers, and the two electrode active material layers. A first region not covered with any of the two electrode active material layers is provided at ends of both principal surfaces of the electrode collector. A second region not covered with any of the two counter-electrode collectors is provided at an end of a principal surface of each of the two counter-electrode active material layers that faces toward a corresponding one of the counter-electrode collectors. The first insulating layer covers the second region. The electrode collector projects from an outer surface of the first insulating layer.

This reduces the occurrence of an end face short circuit between the counter-electrode collectors and the electrode active material layers or the electrode collector due to contact, as the counter-electrode collectors recede from the counter-electrode active material layers. Further, the formation of the first insulating layer reduces exposure of the electrode active material layers and the counter-electrode active material layers. This reduces the occurrence of damage, a short circuit, or other failures due to contact of the electrode active material layers and the counter-electrode active material layers with other members. This makes it possible to enhance the reliability of the battery.

Further, for example, a length of the second region on a straight line connecting one point on an outer edge of the battery with a center of the battery and intersecting the second region in planar view may be greater than or equal to 100 µm.

This makes it hard for the counter-electrode collectors to project from the counter-electrode active material layers in planar view even when damaged, thus reducing the occurrence of an end face short circuit due to contact with the electrode active material layers or the electrode collector. This makes it possible to enhance the reliability of the battery.

Further, for example, a length of the first region on a straight line connecting one point on an outer edge of the battery with a center of the battery and intersecting the first region in planar view may be greater than or equal to 1 mm.

This makes it possible to easily form terminals in regions provided at ends of the electrode collector and are not covered with the electrode active material layers. This makes it possible to make good connections between the terminals and the electrode collector and reduce connection resistance. The reduction in connection resistance brings about improvement in large-current characteristics of the battery, for example, making fast charging possible.

Further, for example, a thickness of a portion of the first insulating layer that covers the second region may be greater than a thickness of each of the counter-electrode collectors.

This makes it hard for the counter-electrode collectors to project from the counter-electrode active material layers in planar view even when damaged, thus reducing the occurrence of an end face short circuit due to contact with the electrode active material layers or the electrode collector. This makes it possible to enhance the reliability of the battery.

Further, for example, each of the electrode active material layers may contain a negative-electrode active material, and each of the counter-electrode active material layers may contain a positive-electrode active material. That is, the electrode collector and each of the electrode active material layers may be a negative-electrode collector and a negative-electrode active material layer, respectively, and each of the counter-electrode collectors and each of the counter-electrode active material layers may be a positive-electrode collector and a positive-electrode active material layer, respectively.

In this way, a region of the positive-electrode active material layer that is covered with the positive-electrode collector and that functions as a positive electrode becomes smaller than the negative-electrode active material layer. This causes the capacitance of the negative-electrode active material layer to tend to be larger than the capacitance of the positive-electrode active material layer. This suppresses deposition of metal derived from metal ions that were not incorporated into the negative-electrode active material layer, making it possible to further enhance the reliability of the battery.

Further, for example, the first insulating layer may contain resin.

This makes it possible to enhance the bondability between the first insulating layer and each collector and between the first insulating layer and each active material layer through an anchoring effect by which the resin contained in the first insulating layer penetrates into the electrode collector, the counter-electrode collectors, the electrode active material layers, and the counter-electrode active material layers, making it possible to inhibit the first insulating layer from delaminating from the collectors and the active material layers.

Further, for example, the first insulating layer may contain a metallic oxide.

This makes the first insulating layer hard. Therefore, even in a case where the first insulating layer is thinly formed at the time of manufacture of the battery, the first insulating layer thus formed hardly deforms and is uniform in thickness.

Further, for example, the solid electrolyte layer may contain a solid electrolyte having lithium ion conductivity.

This makes it possible to enhance the battery reliability of a lithium-ion battery containing a solid electrolyte.

Further, for example, a planimetric shape of the battery may be a rectangle, and the first insulating layer may be provided at least on one side of the battery in planar view.

This makes it possible, for example, to, while securing reliability on a side on which a terminal is formed, do an en-bloc cutting process on sides on which no terminals are formed, making it possible to efficiently manufacture the battery.

Further, for example, a side surface of a side on which the first insulating layer is not provided may be a cut surface.

Since the side surfaces of the battery are cut surfaces, a side surface of the electrode layer, side surfaces of the counter-electrode layers, and side surfaces of the solid electrolyte layers can be easily made flush with one another.

Further, for example, a shape of the cut surface may be a rectangle or a trapezoid.

This causes an end of the cut surface to be linear. This eradicates the presence of a space that is formed when the end is not linear and that does not contribute to the charge-discharge performance of the battery, making it possible to reduce deterioration of the substantive energy density of the battery. This makes it possible to increase the energy density of the battery.

Further, for example, the electrode collector, the two electrode active material layers, the two solid electrolyte layers, the two counter-electrode active material layers, and the two counter-electrode collectors may constitute a unit cell, and a plurality of the unit cells may be laminated.

This laminating of the unit cells makes it possible to achieve a highly reliable laminated battery.

Further, for example, the battery may further include a second insulating layer that covers ones of the side surfaces of the two counter-electrode collectors, the two counter-electrode active material layers, the two solid electrolyte layers, and the two electrode active material layers that are not covered with the first insulating layer, and at least one of a plurality of the counter-electrode collectors may project from an outer surface of the second insulating layer.

As a result of this, in the region of the counter-electrode collector not covered with the second insulating layer excluding the outermost shell of a laminated battery laminated so that a parallel connection can be made, it is easy to form counter-electrode terminals through which to take currents out of the counter-electrode layers. Further, on the side surface from which the counter-electrode collector protrudes, exposure of the electrode active material layers and the counter-electrode active material layers is reduced. This reduces the occurrence of damage, a short circuit, or other failures due to contact of the electrode active material layers and the counter-electrode active material layers with other members. This makes it possible to enhance the reliability of the battery.

The following describes embodiments in concrete terms with reference to the drawings.

It should be noted that the embodiments to be described below each illustrate a comprehensive and specific example. The numerical values, shapes, materials, constituent elements, placement and topology of constituent elements, steps, and orders of steps, or other features that are shown in the following embodiments are just a few examples and are not intended to limit the present disclosure. Further, those of the constituent elements in the following embodiments which are not recited in an independent claim are described as optional constituent elements.

Further, the drawings are schematic views, and are not necessarily strict illustrations. Accordingly, for example, the drawings are not necessarily to scale. Further, in the drawings, substantially the same components are given the same reference signs, and a repeated description may be omitted or simplified.

Further, terms such as "parallel" and "orthogonal" used herein to show the way in which elements are interrelated, terms such as "rectangular" and "circular" used herein to show the shape of an element, and ranges of numerical values used herein are not expressions that represent only exact meanings but expressions that are meant to also encompass substantially equivalent ranges, e.g., differences of approximately several percent.

Further, in the present specification and drawings, the x axis, the y axis, and the z axis represent the three axes of a three-dimensional orthogonal coordinate system. In a case where the planimetric shape of a power-generating element of a battery is a rectangle, the x axis and the y axis extend in directions parallel with a first side of the rectangle and a second direction orthogonal to the first side, respectively. The z axis extends in a direction of laminating of a plurality of unit cells included in the power-generating element. Further, the term "direction of laminating" as used herein corresponds to a direction normal to principal surfaces of a collector and an active material layer. Further, the term "planar view" used herein means a case where the battery is seen from an angle perpendicular to the principal surfaces, unless otherwise noted.

Further, the terms "above" and "below" used herein do not refer to an upward direction (upward in a vertical direction) and a downward direction (downward in a vertical direction) in absolute space recognition, but are used as terms that are defined by a relative positional relationship on the basis of an order of laminating in a laminate configuration. Further, the terms "above" and "below" are applied not only in a case where two constituent elements are placed at a spacing from each other with another constituent element present between the two constituent elements, but also in a case where two constituent elements touch each other by being placed in close contact with each other. In the following description, the negative side of the z axis is referred to as "below" or "lower", and the positive side of the z axis is referred to as "above" or "upper".

Further, the term "project" as used herein means projecting further outward than the center of a unit cell in a view of a cross-section orthogonal to a principal surface of the unit cell, unless otherwise noted. The clause "an element A projects further than an element B" means that a distal end of the element A projects further than a distal end of the element B in a direction of projection, i.e., that the distal end of the element A is further away from the center of the unit cell than the distal end of the element B. The "direction of projection" is deemed to be a direction parallel with the principal surface of the unit cell. Further, the term "projecting portion of the element A" means a portion of the element A that projects further than the tip of the element B in the direction of projection. Examples of elements include electrode layers, active material layers, solid electrolyte layers, and collectors.

Further, the ordinal numbers such as "first" and "second" as used herein do not mean the number or order of constituent elements but are used for the purpose of avoiding confusion between constituent elements of the same type and distinguishing between them, unless otherwise noted.

### (Embodiment 1)

### [1. Brief Overview]

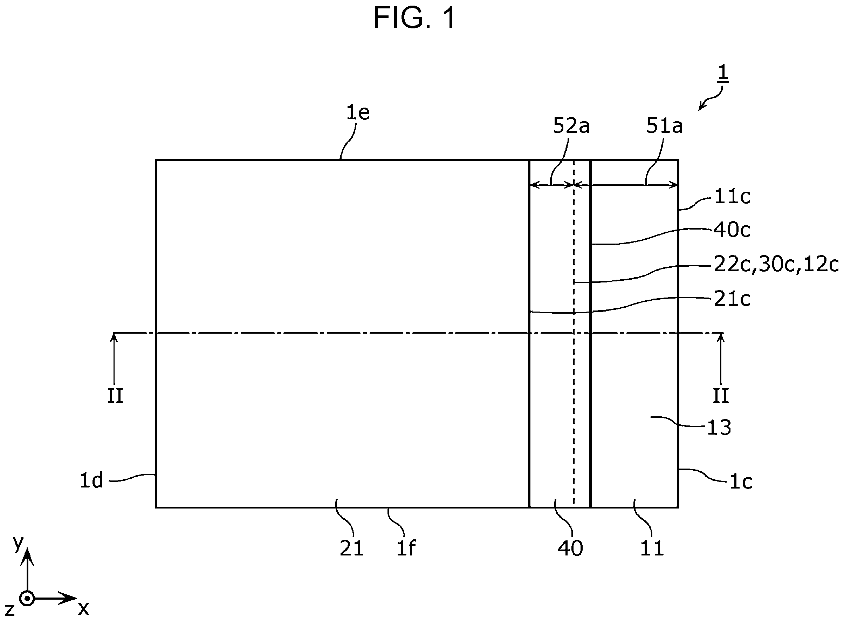

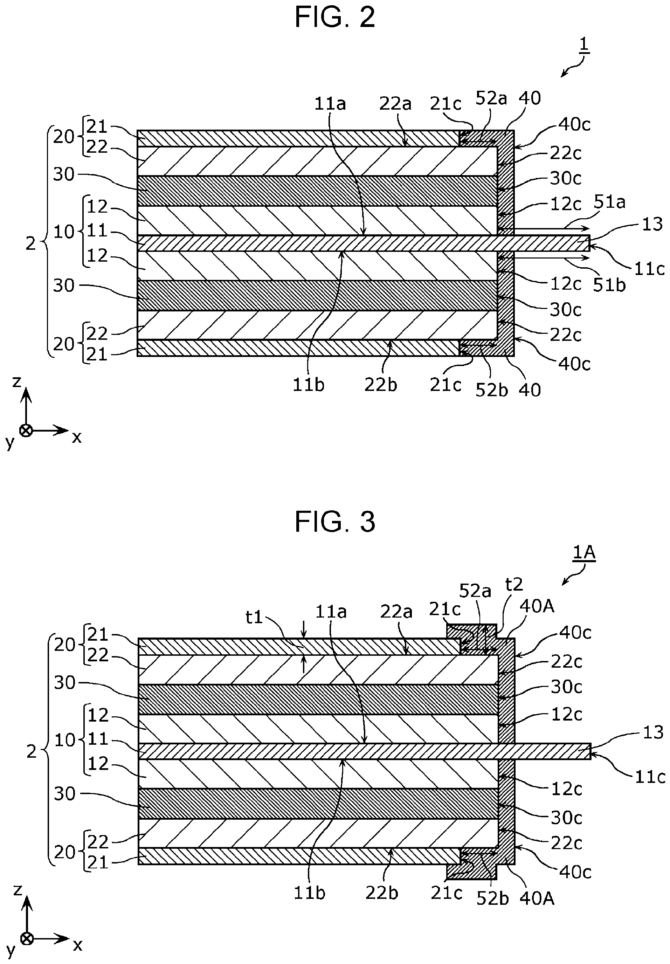

First, a brief overview of a battery according to Embodiment 1 is given with reference to Figs. 1 and 2.

Fig. 1 is a schematic top view showing an example of a battery 1 according to the present embodiment. In Fig. 1, the planimetric shapes of constituent elements of the battery 1 are indicated by solid lines and dashed lines. Fig. 2 is a schematic cross-sectional view of the battery 1 according to the present embodiment as taken along line II-II in Fig. 1.

As shown in Figs. 1 and 2, the battery 1 according to the present embodiment includes an electrode layer 10, counter-electrode layers 20 placed opposite the electrode layer 10, and solid electrolyte layers 30 each located between the electrode layer 10 and a corresponding one of the counter-electrode layers 20. The battery 1 includes two counter-electrode layers 20 and two solid electrolyte layers 30. A first one of the counter-electrode layers 20 and a first one of the solid electrolyte layers 30 are disposed beside a first principal surface of the electrode layer 10, and a second one of the counter-electrode layers 20 and a second one of the solid electrolyte layers 30 are disposed beside a second principal surface of the electrode layer 10. The electrode layer 10, the two counter-electrode layers 20, and the two solid electrolyte layers 30 constitute a unit cell 2.

The electrode layer 10 includes an electrode collector 11 and electrode active material layers 12 each located between the electrode collector 11 and a corresponding one of the solid electrolyte layers 30. The electrode layer 10 includes two electrode active material layers 12. The two electrode active material layers 12 are disposed on both principal surfaces of the electrode collector 11. At an end of a principal surface 11a of the electrode collector 11, there is provided a region 51a not covered with an upper one of the electrode active material layers 12. At an end of a principal surface 1 1b of the electrode collector 11, there is provided a region 51b not covered with a lower one of the electrode active material layers 12. The regions 51a and 51b are each an example of a first region not covered with any of the two electrode active material layers 12.

The counter-electrode layers 20 include counter-electrode collectors 21 and counter-electrode active material layers 22 each located between a corresponding one of the counter-electrode collectors 21 and a corresponding one of the solid electrolyte layers 30. At an end of a principal surface 22a of an upper one of the counter-electrode active material layers 22, there is provided a region 52a not covered with an upper one of the counter-electrode collectors 21. At an end of a principal surface 22b of a lower one of the counter-electrode active material layers 22, there is provided a region 52b not covered with a lower one of the counter-electrode collectors 21. The regions 52a and 52b are each an example of a second region not covered with any of the two counter-electrode collectors 21.

The battery 1 further includes an insulating layer 40 that covers side surfaces of the two electrode active material layers 12, the two solid electrolyte layers 30, the two counter-electrode active material layers 22, and the two counter-electrode collectors 21. The insulating layer 40 is an example of a first insulating layer. Specifically, as shown in Fig. 2, the insulating layer 40 covers side surfaces 21c of the two counter-electrode collectors 21, side surfaces 22c of the two counter-electrode active material layers 22, side surfaces 30c of the two solid electrolyte layers 30, and side surfaces 12c of the two electrode active material layers 12. For example, the side surfaces 21c, 22c, 30c, and 12c are completely covered with the insulating layer 40 and are not exposed. The side surfaces 21c, 22c, 30c, and 12c are for example flat surfaces. The side surfaces 22c, 30c, and 12c are for example flush with one another, i.e., form a stepless identical flat surface.

The electrode collector 11 has both a region covered with the insulating layer 40 and a region not covered with the insulating layer 40. In other words, the electrode collector 11 projects from an outer surface 40c of the insulating layer 40. That is, the electrode collector 11 includes a projecting portion 13 that projects outward from the outer surface 40c. In the region of the electrode collector 11 not covered with the insulating layer 40, it is easy to form an electrode terminal through which to take a current out of the electrode layer 10.

Although the planimetric shape of the battery 1 is a rectangle as shown in Fig. 1, this is not intended to impose any limitation. The planimetric shape of the battery 1 may be a polygon such as a regular square, a hexagon, or an octagon or may be a circle or an ellipse.

As shown in Fig. 1, the battery 1 has side surfaces 1c and 1d that face opposed to each other and side surfaces 1e and 1f that face opposed to each other. The side surfaces 1c and 1d constitute short sides of the rectangular battery 1 in planar view. The side surfaces 1e and 1f constitute long sides of the rectangular battery 1 in planar view. As shown in Fig. 1, the side surface 1c of the battery 1 is constituted by a side surface 11c of the electrode collector 11 and the outer surface 40c of the insulating layer 40.

Although, in Fig. 1, the electrode collector 11 is structured to have the projecting portion 13, which projects from the outer surface 40c of the insulating layer 40, at the side of the side surface 1c, this projecting portion 13 may be at the side of the side surface 1d or may be at the side of the side surface 1e or at the side of the side surface 1f.

The battery 1 is for example an all-solid battery. Further, the side surfaces 1d, 1e, and 1f of the battery 1, which do not have the projecting portion 13 of the electrode collector 11, are flat surfaces. On each of these flat surfaces, a side surface of the electrode layer 10, side surfaces of the counter-electrode layers 20, and side surfaces of the solid electrolyte layers 30 are flush with one another. That is, they are in a stepless state and located on an identical flat surface. As a result of this, a side surface of the battery 1 that does not have the projecting portion 13 of the electrode collector 11 has no step between a side surface of one layer and a side surface of another layer and is free of irregularities. This prevents the formation of a space that does not function as a battery due to irregularities, bringing about improvement in substantive volume energy density of the battery. Further, since a side surface of one layer and a side surface of another layer can be made flush with each other, for example, by cutting the layers at one time, the battery 1 is easily manufactured.

The side surfaces 1d, 1e, and 1f of the battery 1, which do not have the projecting portion 13 of the electrode collector 11, are for example cut surfaces. Specifically, the side surfaces 1d, 1e, and 1f are surfaces formed by being cut with the cutting edge of a cutter or other tools for cutting. The side surfaces 1d, 1e, and 1f have, for example, traces of cutting such as fine grooves. Since the side surfaces are cut surfaces, a side surface of the electrode layer 10, side surfaces of the counter-electrode layers 20, and side surfaces of the solid electrolyte layers 30 can be easily made flush with one another. It should be noted that the traces of cutting may be smoothed by polishing or other processes. The planimetric shapes of the cut surfaces are not limited; however, in the case of the battery 1, the planimetric shapes of the cut surfaces are rectangles. The cut surfaces are for example parallel to a direction of laminating (z-axis direction) of the battery 1.

The electrode collector 11 is in contact with the electrode active material layers 12 on both principal surfaces 11a and 11b. As mentioned above, the regions 51a and 51b, which are not covered with the electrode active material layers 12, are provided at ends of at least one side of the electrode collector 11 in planar view. Further, the region 51a has both a region covered with the insulating layer 40 and a region not covered with the insulating layer 40. The region not covered with the insulating layer 40 in planar view is equivalent to the projecting portion 13.

While the following gives a description with a focus on the region 51a at the side of the upper surface, the region 51b at the side of the lower surface has a similar configuration.

In order for a terminal to be easily formed in the region 51a, which is provided at an end of the electrode collector 11 and which is not covered with the electrode active material layer 12, the length of the region 51a is for example greater than or equal to 1 mm. Further, for example, the length of the region 51a is shorter than or equal to 20 mm. This makes it possible to prevent a terminal portion to overgrow in size and reduce the size of a portion that does not function as a battery, making it possible to improve the volume energy density of the battery 1.

It should be noted that the length of the region 51a is a length on a straight line connecting a point on an outer edge of the battery 1 with the center of the battery 1 and intersecting the region 51a in planar view. For example, the point on the outer edge is a point on the side surface 11c of the electrode collector 11 in planar view. The center of the battery 1 is the geometric center of the battery 1 in planar view. For example, in a case where the planimetric shape of the battery 1 is a rectangle, the center of the battery 1 is a point of intersection of diagonal lines in planar view. The straight line connecting the point on the outer edge of the battery 1 with the center of the battery 1 and intersecting the region 51a is for example line II-II shown in Fig. 1. That is, the length of the region 51a is a length along an x-axis direction. Although, in the present embodiment, the region 51a is a rectangular region elongated in a y-axis direction, this is not intended to impose any limitation.

It should be noted that although the length of the region 51a is equal to the length of the region 51b, this is not intended to impose any limitation. The length of the region 51a and the length of the region 51b may be different from each other.

The thickness of the electrode collector 11 is for example greater than or equal to 5 µm and smaller than or equal to 100 µm but is not limited to this range.

As a material of the electrode collector 11, a publicly-known material may be used. As the electrode collector 11, a foil-like body, a plate-like body, a net-like body, or other bodies composed of, for example, copper, aluminum, nickel, iron, stainless steel, platinum, gold, an alloy of two or more types thereof, or other substances are used.

The upper counter-electrode collector 21 is in contact with the principal surface 22a of the counter-electrode active material layer 22. At an end of at least one side of the counter-electrode collector 21, the region 52a, where the principal surface 22a of the counter-electrode active material layer 22 is not covered, is provided. That is, the counter-electrode collector 21 has a side surface receding from the counter-electrode active material layer 22. In other words, the side surface 21c of the counter-electrode collector 21 is closer to the center of the battery 1 than the side surface 22c of the counter-electrode active material layer 22.

The same applies to the lower counter-electrode collector 21. While the following gives a description with a focus on the upper region 52a, the same applies to the lower region 52b.

Preventing the counter-electrode collector 21 from projecting from the counter-electrode active material layer 22 in planar view when part of the counter-electrode collector 21 becomes damaged makes it possible to reduce the occurrence of a short circuit in the side surface 1c of the battery 1c. For this purpose, the length of the region 52a is for example greater than or equal to 100 µm. Further, for example, the length of the region 52a is for example shorter than or equal to 2 mm. This makes it possible, while preventing the area of the counter-electrode collector 21 from becoming too small, sufficiently secure a portion that functions as a battery, making it possible to improve the volume energy density of the battery 1.

It should be noted that the length of the region 52a is a length on a straight line connecting a point on the outer edge of the battery 1 with the center of the battery 1 and intersecting the region 52a in planar view. For example, the point on the outer edge, the center, and the straight line intersecting the region 52a are similar to those in the case of the region 51a. That is, the length of the region 52a is for example a length along line II-II shown in Fig. 1 and a length along the x-axis direction. Although, in the present embodiment, the region 52a is a rectangular region elongated in the y-axis direction, this is not intended to impose any limitation.

It should be noted that although the length of the region 52a is equal to the length of the region 52b, this is not intended to impose any limitation. The length of the region 52a and the length of the region 52b may be different from each other.

Further, the receding side surface 21c of the counter-electrode collector 21 is in contact with a portion of the insulating layer 40 that covers the region 52a. In the present embodiment, an upper surface of the upper counter-electrode collector 21 and an upper surface of the insulating layer 40 are flush with each other. Further, a lower surface of the lower counter-electrode collector 21 and a lower surface of the insulating layer 40 are flush with each other. This makes it possible to easily laminate the unit cell 2 to form a laminated battery. A specific example of the laminated battery will be described later in Embodiment 2.

The thickness of the counter-electrode collector 21 is for example greater than or equal to 5 µm and smaller than or equal to 100 µm but is not limited to this range.

As a material of the counter-electrode collector 21, a publicly-known material may be used. As the counter-electrode collector 21, a foil-like body, a plate-like body, a net-like body, or other bodies composed of, for example, copper, aluminum, nickel, iron, stainless steel, platinum, gold, an alloy of two or more types thereof, or other substances are used.

The electrode active material layers 12 are disposed on both principal surfaces 11a and 1 1b of the electrode collector 11. Further, a surface of each of the electrode active material layers 12 that is disposed on the opposite side of the electrode collector 11 is in contact with the corresponding one of the solid electrolyte layers 30. Each of the electrode active material layers 12 and a corresponding one of the counter-electrode active material layers 22 face each other across the corresponding one of the solid electrolyte layers 30. The side surfaces 12c of the electrode active material layers 12 are in contact with the insulating layer 40. Further, the electrode active material layers 12 and the counter-electrode active material layers 22 are identical in shape and position to each other in planar view. The thickness of each of the electrode active material layers 12 is for example greater than or equal to 5 µm and smaller than or equal to 300 µm. A material for use in the electrode active material layers 12 will be described later.

Each of the counter-electrode active material layers 22 is laminated on the corresponding one of the solid electrolyte layers 30 and placed opposite a corresponding one of the electrode active material layers 12. A surface of each of the counter-electrode active material layers 22 that is disposed on the opposite side of the corresponding one of the solid electrolyte layers 30 is in contact with the corresponding one of the counter-electrode collectors 21. As mentioned above, at an end of at least one side of each of the counter-electrode active material layers 22, the region 52a or 52b, which is not in contact with the corresponding one of the counter-electrode collectors 21, is provided. The thickness of each of the counter-electrode active material layers 22 is for example greater than or equal to 5 µm and smaller than or equal to 300 µm. A material for use in the counter-electrode active material layers 22 will be described later.

Each of the solid electrolyte layers 30 is located between the corresponding one of the electrode active material layers 12 and the corresponding one of the counter-electrode active material layers 22. The thickness of each of the solid electrolyte layers 30 is for example greater than or equal to 5 µm and smaller than or equal to 150 µm but is not limited to this range.

Each of the solid electrolyte layers 30 contains at least a solid electrolyte and, when needed, may contain a binder material. Each of the solid electrolyte layers 30 may contain a solid electrolyte having lithium ion conductivity.

As the solid electrolyte, a publicly-known material such as a lithium ion conductor, a sodium ion conductor, or a magnesium ion conductor may be used. As the solid electrolyte, for example, a solid electrolyte material such as a sulfide solid electrolyte, a halogenated solid electrolyte, or an oxide solid electrolyte is used. In the case of a material that is able to conduct lithium ions, for example, a synthetic substance composed of lithium sulfide (Li₂S) and diphosphorous pentasulfide (P₂S₅) is used as the sulfide solid electrolyte. Further, as the sulfide solid electrolyte, a sulfide such as Li₂S-SiS₂, Li₂S-B₂S₃, or Li₂S-GeS₂ may be used, or a sulfide obtained by adding at least one type of Li₃N, LiCl, LiBr, Li₃PO₄, or Li₄SiO₄ as an additive to the aforementioned sulfide may be used.

In the case of a material that is able to conduct lithium ions, for example, Li₇La₃Zr₂O₁₂ (LLZ), Li_{1.3}Al_{0.3}Ti_{1.7}(PO₄)₃ (LATP), (La,Li)TiO₃ (LLTO), or other substances are used as the oxide solid electrolyte.

As the binder material, for example, elastomers are used, or an organic compound such as polyvinylidene fluoride, acrylic resin, or cellulose resin may be used.

In the examples illustrated in Figs. 1 and 2, the insulating layer 40 is in contact with the side surfaces 12c of the electrode active material layers 12, the side surfaces 30c of the solid electrolyte layers 30, the side surfaces 22c of the counter-electrode active material layers 22, and the side surfaces 21c of the counter-electrode collectors 21 on a side surface facing toward a place or position where the projecting portion 13 is present in planar view. Further, the insulating layer 40 covers parts of the principal surfaces 11a and 1 1b of the electrode collector 11.

The insulating layer 40 contains, for example, at least one of resin and a metallic oxide. Examples of the resin include silicone resin, epoxy resin, acrylic resin, and polyimide resin. The resin may be thermosetting resin or ultraviolet curable resin. Since the insulating layer 40 contains the resin, the bondability of the insulating layer 40 to each layer and each collector can be enhanced, for example, through an anchoring effect by which the resin penetrates into the electrode collector 11, the electrode active material layers 12, the solid electrolyte layers 30, the counter-electrode active material layers 22, and the counter-electrode collectors 21. The metallic oxide is for example silicon oxide, titanium oxide, aluminum oxide, or other metallic oxides. When the insulating layer 40 contains the metallic oxide, the insulating layer 40 is hard. For this reason, even in a case where the insulating layer 40 is thinly formed at the time of manufacture of the battery 1, the insulating layer 40 thus formed hardly deforms and is uniform in thickness.

In the present embodiment, either the electrode layer 10, which includes the electrode active material layers 12, or each of the counter-electrode layers 20, which include the counter-electrode active material layers 22, is a positive-electrode layer including a positive-electrode active material layer, and the other is a negative-electrode layer including a negative-electrode active material layer. For example, the electrode layer 10 is a negative-electrode layer, and each of the counter-electrode layers 20 is a positive-electrode layer. That is, the electrode collector 11 is a negative-electrode collector, and each of the electrode active material layers 12 is a negative-electrode active material layer. Each of the counter-electrode collectors 21 is a positive-electrode collector, and each of the counter-electrode active material layers 22 is a positive-electrode active material layer.

The positive-electrode active material layer contains at least a positive-electrode active material and, when needed, may contain at least one of a solid electrolyte, a conductive auxiliary agent, and a binder material.

As the positive-electrode active material, a publicly-known material that is capable of occlusion and ejection (e.g., insertion and desorption or dissolution and deposition) of lithium ions, sodium ions, or magnesium ions may be used. In the case of a material that is capable of desorption and insertion of lithium ions, for example, a lithium cobalt oxide complex oxide (LCO), a lithium nickel oxide complex oxide (LNO), a lithium manganese oxide complex oxide (LMO), a lithium-manganese-nickel complex oxide (LMNO), a lithium-manganese-cobalt complex oxide (LMCO), a lithium-nickel-cobalt complex oxide (LNCO), a lithium-nickel-manganese-cobalt complex oxide (LNMCO), or other substances are used as the positive-electrode active material.

As the solid electrolyte, the aforementioned solid electrolyte material may be used. Further, as the conductive auxiliary agent, for example, a conducting material such as acetylene black, carbon black, graphite, or carbon fiber is used. Further, as the binder material, the aforementioned binder material may be used.

The negative-electrode active material layer contains at least a negative-electrode active material and, when needed, may contain at least one of a solid electrolyte, a conductive auxiliary agent, and a binder material similar to that of the positive-electrode active material layer.

As the negative-electrode active material, a publicly-known material that is capable of occlusion and ejection (insertion and desorption or dissolution and deposition) of lithium ions, sodium ions, or magnesium ions may be used. In the case of a material that is capable of desorption and insertion of lithium ions, for example, a carbon material such as natural graphite, synthetic graphite, graphite carbon fiber, or resin heat-treated carbon, metal lithium, a lithium alloy, an oxide of lithium and a transition metal element, or other substances are used as the negative-electrode active material.

Thus, in the battery 1, the regions 51a and 51b, which are not covered with the electrode active material layers 12, are provided at ends of the principal surfaces 11a and 11b, respectively, of the electrode collector 11. Further, the region 52a, which is not covered with the upper counter-electrode collector 21, is provided at an end of the principal surface 22a of the upper counter-electrode active material layer 22. The region 52b, which is not covered with the lower counter-electrode collector 21, is provided at an end of the principal surface 22b of the lower counter-electrode active material layer 22. Furthermore, the battery 1 includes the insulating layer 40, which covers the side surfaces 21c of the counter-electrode collectors 21, the side surfaces 22c of the counter-electrode active material layers 22, the side surfaces 30c of the solid electrolyte layers 30, and the side surfaces 12c of the electrode active material layers 12. The electrode collector 11 projects from the outer surface 40c of the insulating layer 40.

This reduces the occurrence of an end face short circuit between the counter-electrode collectors 21 and the electrode active material layers 12 or the electrode collector 11 due to contact, as the counter-electrode collectors 21 recede from the counter-electrode active material layers 22. Further, the provision of the insulating layer 40 reduces exposure of the electrode active material layers 12 and the counter-electrode active material layers 22. This reduces the occurrence of damage, a short circuit, or other failures due to contact of the electrode active material layers 12 and the counter-electrode active material layers 22 with other members. This makes it possible to enhance the reliability of the battery 1.

Further, in a case where the length of the region 52a, which is provided at an end of the counter-electrode active material layer 22 and which is not covered with the counter-electrode collector 21, is greater than or equal to 100 µm, it is hard for the counter-electrode collector 21 to project from the counter-electrode active material layer 22 in planar view even when damaged. This reduces the occurrence of an end face short circuit due to contact with the electrode active material layer 12 or the electrode collector 11. This makes it possible to enhance the reliability of the battery.

Further, in a case where the length of the region 51a, which is provided at an end of the electrode collector 11 and which is not covered with the electrode active material layer 12, is greater than or equal to 1 mm, this region 51a can be utilized to make it easy to form a terminal.

Further, in a case where the electrode layer 10 is a negative-electrode layer and each of the counter-electrode layers 20 is a positive-electrode layer, a region of the positive-electrode active material layer that is covered with the positive-electrode collector and that functions as a positive electrode becomes smaller than the negative-electrode active material layer. This causes the capacitance of the negative-electrode active material layer to tend to be larger than the capacitance of the positive-electrode active material layer. This suppresses deposition of metal derived from metal ions that were not incorporated into the negative-electrode active material layer, making it possible to further enhance the reliability of the battery 1.

### [2. Modifications]

The following describes modifications of the battery 1 according to the present embodiment. The following gives a description with a focus on differences from Embodiment 1, and omits or simplifies a description of common features.

### [2-1. Modification 1]

First, a battery according to Modification 1 is described with reference to Fig. 3. Fig. 3 is a schematic cross-sectional view of a battery 1A according to the present modification.

The battery 1A shown in Fig. 3 differs from the battery 1 shown in Fig. 2 in that the battery 1A includes an insulating layer 40A instead of the insulating layer 40. As shown in Fig. 3, the thickness t2 of a portion of the insulating layer 40A that covers the region 52a is greater than the thickness t1 of the counter-electrode collector 21. Specifically, the insulating layer 40A covers an end of the upper surface of the upper counter-electrode collector 21.

Thus, in a case where the thickness t2 of the portion of the insulating layer 40A that covers the region 52a is greater than the thickness t1 of the counter-electrode collector 21, it is hard for the counter-electrode collector 21 to project from the counter-electrode active material layer 22 in planar view even when damaged. This reduces the occurrence of an end face short circuit due to contact of the counter-electrode collector 21 with the electrode active material layer 12 or the electrode collector 11. This makes it possible to enhance the reliability of the battery 1A.

In the present modification, the same applies to the lower counter-electrode collector 21 and a portion of the insulating layer 40A that covers the region 52b. This makes it hard for the lower counter-electrode collector 21 to project from the counter-electrode active material layer 22, thus reducing the occurrence of an end face short circuit due to contact with the electrode active material layer 12 or the electrode collector 11. This makes it possible to enhance the reliability of the battery 1A.

It should be noted that the thickness t2 of either the upper or lower portion of the insulating layer 40A may not be great. For example, the lower surface of the lower counter-electrode collector 21 and a lower surface of the insulating layer 40A may be flush with each other as in the case of Embodiment 1.

### [2-2. Modification 2]

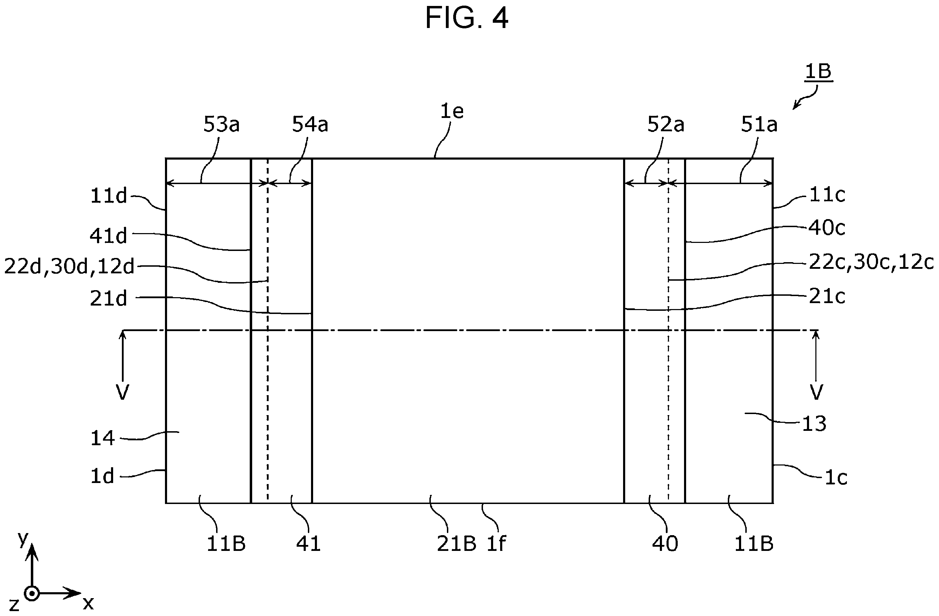

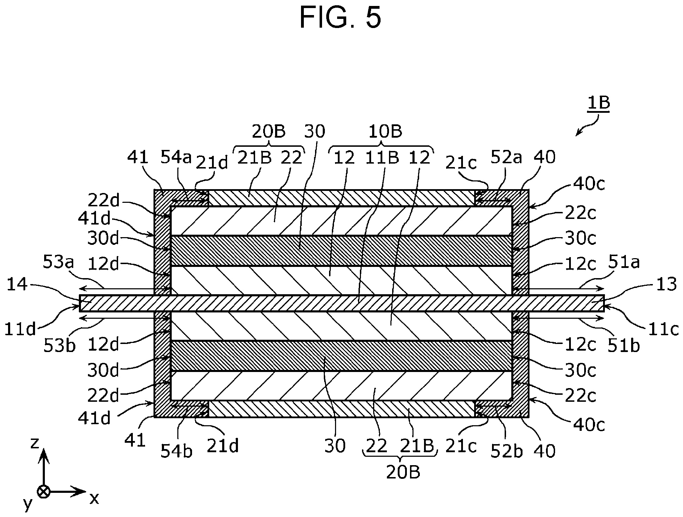

Next, a battery according to Modification 2 is described with reference to Figs. 4 and 5.

Fig. 4 is a schematic top view of a battery 1B according to the present modification. In Fig. 4, the planimetric shapes of constituent elements of the battery 1B are indicated by solid lines and dashed lines. Fig. 5 is a schematic cross-sectional view of the battery 1B according to the present modification as taken along line V-V in Fig. 4.

As shown in Figs. 4 and 5, the battery 1B differs from the battery 1 of Embodiment 1 in that the battery 1B includes an electrode layer 10B and counter-electrode layers 20B instead of the electrode layer 10 and the counter-electrode layers 20. Further, the battery 1B further includes an insulating layer 41.

The electrode layer 10B includes an electrode collector 11B instead of the electrode collector 11. The electrode collector 11B projects from the outer surface 40c of the insulating layer 40 and an outer surface 41d of the insulating layer 41 on two sides of the battery 1B. That is, the electrode collector 11B has the projecting portion 13 at the side of the side surface 1c and has a projecting portion 14 at the side of the side surface 1d. The projecting portion 14 is similar in specific configuration to the projecting portion 13.

For example, at an end of a principal surface 11a of the electrode collector 11b at the side of the side surface 11d of the electrode collector 11B, there is provided a region 53a not covered with the upper electrode active material layer 12. At an end of a principal surface 11b of the electrode collector 11B at the side of the side surface 11d, there is provided a region 53b not covered with the lower electrode active material layer 12. The regions 53a and 53b are each an example of a first region not covered with any of the two electrode active material layers 12. The regions 53a and 53b are for example equal in length to the regions 51a and 51b, but may be different in length from the regions 51a and 51b.

The counter-electrode layers 20B include counter-electrode collectors 21B instead of the counter-electrode collectors 21. The counter-electrode layers 20B recede from the side surfaces 22c of the counter-electrode active material layers 22 and side surfaces 22d of the counter-electrode active material layers 22 on two sides of the battery 1B. Specifically, at an end of the principal surface 22a of the upper counter-electrode active material layer 22 at the side of a side surface 21d of one of the counter-electrode collectors 21B, there is provided a region 54a not covered with the upper counter-electrode collector 21B. At an end of the principal surface 22b of the lower counter-electrode active material layer 22 at the side of a side surface 21d, there is provided a region 54b not covered with the lower counter-electrode collectors 21B. The regions 54a and 54b are each an example of a second region not covered with any of the two counter-electrode collectors 21B. The regions 54a and 54b are for example equal in length to the regions 52a and 52b, but may be different in length from the regions 52a and 52b.

The insulating layer 41 is an example of a second insulating layer. The insulating layer 41 covers the side surfaces 21d of the two counter-electrode collectors 21B, the side surfaces 22d of the two counter-electrode active material layers 22, side surfaces 30d of the two solid electrolyte layers 30, and side surfaces 12d of the two electrode active material layers 12. For example, the side surfaces 21d, 22d, 30d, and 12d are completely covered with the insulating layer 41 and are not exposed. The side surfaces 21d, 22d, 30d, and 12d are for example flat surfaces. The side surfaces 22d, 30d, and 12d are for example flush with one another, i.e., form a stepless identical flat surface.

It should be noted that the insulating layer 41 may be formed integrally with the insulating layer 40. Specifically, insulating layers covering the side surfaces 1e and 1f of the battery 1 are provided and may be integrally formed to be continuous with the insulating layers 40 and 41.

Thus, the battery 1B according to the present modification includes not only the insulating layer 40 but also the insulating layer 41, which covers the side surfaces 21d of the counter-electrode collectors 21B, the side surfaces 22d of the counter-electrode active material layers 22, the side surfaces 30d of the solid electrolyte layers 30, and the side surfaces 12d of the electrode active material layers 12. Further, the electrode collector 11B projects from the outer surface 40c of the insulating layer 40 and the outer surface 41d of the insulating layer 41 on two sides of the battery 1B in planar view.

This brings about an effect of reducing the risk of an end face short circuit by forming insulating layers on two sides of the battery 1B. Further, this also makes it possible to easily form terminals in the regions 51a, 51b, 53a, and 53b, which are not provided at ends of the electrode collector 11B and which are not covered with the electrode active material layers 12.

Although, in the illustrated example, the projecting portions 13 and 14 are provided on two sides of the battery 1B opposite to each other, the projecting portions 13 and 14 may be provided two intersecting sides. For example, the projecting portion 14 may be provided on the side surface 1e or 1f.

### [3. Manufacturing Method]

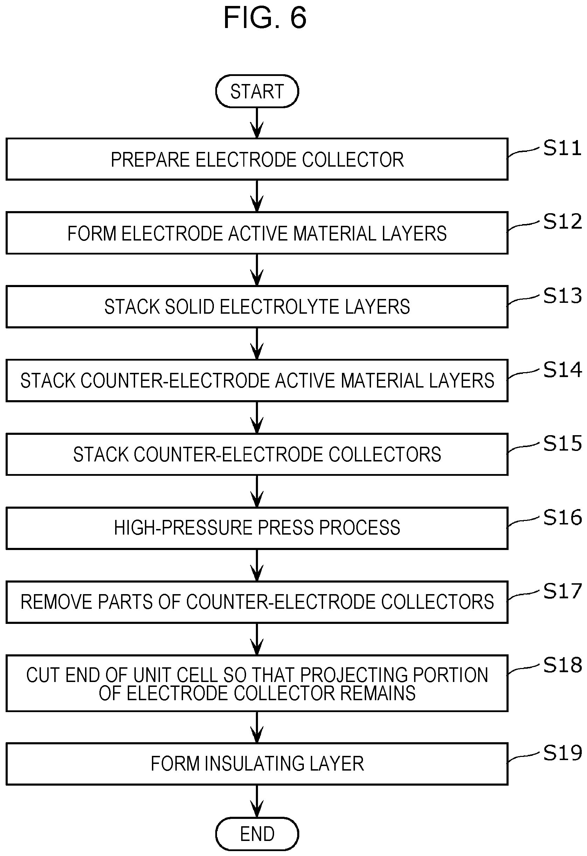

Next, a method for manufacturing batteries 1, 1A, and 1B according to the present embodiment and modifications is described with reference to a flow chart shown in Fig. 6. Fig. 6 is a flow chart showing a method for manufacturing a battery 1 according to the present embodiment. The method for manufacturing a battery 1 as described below is an example, and the method for manufacturing a battery 1 is not limited to the following example.

The method for manufacturing a battery 1 includes (1) a power-generating element laminating step (steps S11 to S14), (2) a counter-electrode collector laminating step (steps S15 to S17), (3) a cutting step (step S18), and (4) an insulating layer forming step (step S19). The following describes each of these steps in detail.

### (1) Power-generating Element Laminating Step

In the power-generating element laminating step, first, an electrode collector 11 is prepared (step S11). Next, power-generating elements composed of electrode active material layers 12, solid electrolyte layers 30, and counter-electrode active material layers 22 are laminated in this order on both principal surfaces 11a and 11b of the electrode collector 11 thus prepared (steps S12, S13, and S14). In laminating these layers, a heat treatment and/or a high-pressure press process is/are performed in each step on an as-needed basis. This gives a laminated polar plate in which the power-generating elements are laminated on both principal surfaces 11a and 11b of the electrode collector 11.

At this point in time, regions 51a and 51b not covered with the electrode active material layers 12 are formed at ends of the principal surfaces 11a and 11b, respectively, of the electrode collector 11. That is, the electrode active material layers 12 are not formed entirely on the principal surfaces 11a and 11b of the electrode collector 11 but formed so that only ends are exposed. This makes it possible to easily form a projecting portion 13 of the electrode collector 11 in a subsequent step.

It should be noted that in the power-generating element laminating step, the electrode active material layers 12 may be formed to entirely cover the principal surfaces 11a and 11b. In this case, in the after-mentioned counter-electrode collector laminating step or cutting step, a step of exposing the ends of the principal surfaces 11a and 11b needs only be executed.

The electrode active material layer 12, the solid electrolyte layer 30, and the counter-electrode active material layer 22 of each of the power-generating elements are each formed in sequence, for example, by using a wet coating method. The use of the wet coating method makes it possible to easily laminate the power-generating element on the electrode collector 11. Usable examples of the wet coating method include, but are not limited to, coating methods such as a die coating method, a doctor blade method, a roll coater method, a screen printing method, and an inkjet method.

In a case where the wet coating method is used, a paint-making step is executed in which slurries are obtained separately by appropriately mixing together each of the materials that form the electrode active material layer 12, the solid electrolyte layer 30, and the counter-electrode active material layer 22 and a solvent.

As the solvent for use in the paint-making step, a publicly-known solvent that is used in fabricating a publicly-known all-solid battery such as a lithium-ion all-solid battery may be used.

The slurries, obtained in the paint-making step, of the respective layers are applied over the electrode collector 11. This layered coating is executed in the order of the electrode active material layer 12, the solid electrolyte layer 30, and then the counter-electrode active material layer 22. In so doing, the overlaying of a layer being overlaid first may be followed by the overlaying of a next layer. Alternatively, the overlaying of the next layer may be started during the overlaying of the layer being overlaid first. That is, steps S12, S13, and S14 may be simultaneously executed in parallel. The slurries of the respective layers are sequentially applied, and after all layers have been applied, a heat treatment that removes the solvents and the binder materials and a high-pressure press process that accelerates the filling of the materials of the respective layers are executed, for example.

It should be noted that the heat treatment and the high-pressure press process may be executed each time a layer is overlaid. In the overlaying of the electrode active material layer 12, the solid electrolyte layer 30, and the counter-electrode active material layer 22, the heat treatment and the high-pressure press process may be executed each time one layer is overlaid, may be executed separately after any two layers have been overlaid and after one layer has been overlaid, or may be executed all at once after all three layers have been overlaid. Further, the high-pressure press process involves the use of, for example, a roll press, a flat-plate press, or other presses. It should be noted that at least one of the heat treatment and the high-pressure press process may not be performed.

Performing a layered coating method in this way makes it possible to improve the bondability of the interface between each of the layers, namely the electrode collector 11, the electrode active material layer 12, the solid electrolyte layer 30, and the counter-electrode active material layer 22, and another and reduce interface resistance, and also makes it possible to improve the bondability between the powder materials used in the electrode active material layer 12, the solid electrolyte layer 30, and the counter-electrode active material layer 22 and reduce grain boundary resistivity. That is, favorable interfaces are formed between each of the layers of the power-generating element and another and between each of the powder materials contained in the respective layers and another.

It should be noted that the power-generating element laminating step may be performed in a series of continuous processes such as roll-to-roll processes.

### (2) Counter-electrode Collector Laminating Step

Next, the counter-electrode collector laminating step is described. In the counter-electrode collector laminating step, counter-electrode collectors 21 are laminated on both surfaces of the laminated polar plate in which the power-generating elements are laminated on both surfaces of the electrode collector 11 (step S15). Specifically, the counter-electrode collectors 21 are laminated on a principal surface 22a of an upper one of the counter-electrode active material layers 22 and a principal surface 22b of a lower one of the counter-electrode active material layers 22, respectively. In so doing, bonding is done by a high-pressure press process or other processes (step S16).

After this, removal of ends of the counter-electrode collectors 21 is performed so that the counter-electrode active material layers 22 become exposed at ends of a side from which the electrode collector 11 is to project (step S17). In this way, a unit cell 2 shown in Fig. 2 is formed.

At least part of the removal is performed by cutting with a knife, a laser, or a jet. In this case, parts of the counter-electrode active material layers 22, the solid electrolyte layers 30, and the electrode active material layers 12 may be simultaneously removed. Note, however, the cutting is performed just short of the electrode collector 11 so that the electrode collector 11, which is to project, is not cut off. Alternatively, the cutting may be replaced by polishing, laser trimming, plasma etching, or chemical etching. Alternatively, the removal may be performed by a combination of these processes. The way in which the removal is performed is not limited to these processes.

In a case where the ends of the principal surfaces 11a and 11b of the electrode collector 11 are not exposed in the power-generating element laminating step, ends of the counter-electrode active material layers 22, the solid electrolyte layers 30, and the electrode active material layers 12 are removed, for example, by cutting just short of the electrode collector 11 or polishing. This makes it possible to expose the ends of the principal surfaces 11a and 11b of the electrode collector 11 to form the regions 51a and 51b.

In the counter-electrode collector laminating step, counter-electrode collectors 21 molded in advance into desired dimensions may be prepared, laminated on both surfaces of the laminated polar plate in which the power-generating elements are laminated on both surfaces of the electrode collector 11, and bonded together by a high-pressure press process or other processes. In this case, the step of removing parts of the counter-electrode collectors (step S17) may be omitted.

### (3) Cutting Step

In the cutting step, an end of the unit cell 2 is cut so that the projecting portion 13 of the electrode collector 11 remains (step S18). Specifically, any part or the whole of a side other than the side on which the projecting portion 13 is provided is cut with a knife, a laser, a jet, or other means.

On the side to be cut, the electrode collector 11, the electrode active material layers 12, the solid electrolyte layers 30, the counter-electrode active material layers 22, and the counter-electrode collectors 21 are laminated, and they are all cut at once. This makes it unnecessary to laminate the layers of the power-generating elements in shapes into which they have been cut, thus making it possible to easily manufacture the battery 1. On the side thus cut, side surfaces of the electrode collector 11, the electrode active material layers 12, the solid electrolyte layers 30, the counter-electrode active material layers 22, and the counter-electrode collectors 21 are exposed. After the cutting, the side surfaces thus exposed may be protected by placing a sealing member that covers the side surfaces. That is, in a case where the side surfaces are covered with another member such as the sealing member, the side surfaces thus exposed may be covered with another member.

### (4) Insulating Layer Forming Step

Next, the insulating layer forming step is described. In the insulating layer forming step, an insulating layer 40 is formed so as to cover the side surfaces 12c of the electrode active material layers 12, the side surfaces 30c of the solid electrolyte layers 30, the side surfaces 22c of the counter-electrode active material layers 22, and the side surfaces 21c of the counter-electrode collectors 21 at the ends of the side from which the electrode collector 11 is to project (step S19). The insulating layer 40 is placed, for example, by curing a coating of a flowable resin material. The coating is performed by inkjet or screen printing or by dipping an end face of the unit cell into the resin material. The curing is performed by drying, heating, photoirradiation, or other processes, depending on the resin material used.

Further, in forming the insulating layer 40, the projecting portion 13 of the electrode collector 11 may be protected by masking with a tape or other material or resist processing so that the projecting portion 13 is not insulated. The electrical conductivity of the projecting portion 13 can be secured by, after the placement of the insulating layer 40, removing a member that protects the projecting portion 13.

### (5) Another Manufacturing Method

The method for manufacturing a battery 1 according to the present embodiment is not limited to the aforementioned example but may for example be the following manufacturing method.

First, an electrode collector 11 having a shape shown in Figs. 1 and 2 is prepared. Then, an application process or other processes are used to laminate electrode active material layers 12 and solid electrolyte layers 30 in this order by layered coating over the electrode collector 11 in shapes shown in Figs. 1 and 2, whereby an electrode plate is obtained.

Next, counter-electrode collectors 21 each having a shape shown in Figs. 1 and 2 are prepared. Then, an application process or other processes are used to laminate counter-electrode active material layers 22 and solid electrolyte layers 30 in this order by layered coating over the counter-electrode collectors 21 in shapes shown in Figs. 1 and 2, whereby counter-electrode plates are obtained.

Next, the electrode plate thus obtained and the counter-electrode plates thus obtained are laminated such that the solid electrolyte layers 30 of the electrode plate and the solid electrolyte layers 30 of the counter-electrode plates make contact with each other. The laminated body thus laminated, i.e., a unit cell 2, is subjected to a high-pressure press process from both sides in the direction of laminating by using a flat-plate press. After that, a battery 1 is obtained by performing the removal of parts of the counter-electrode collectors 21 (step S17), the cutting of part of the unit cell 2 (step S18), and the formation of an insulating layer 40 (step S19).

By applying an insulating material in step S19 so as to cover ends of the counter-electrode collectors 21, a battery 1A shown in Fig. 3 can be formed.

Further, in step S12, regions 53a and 53b not covered with the electrode active material layers 12 are formed at ends at the side of the side surface 11d of the electrode collector 11 as well as the side of the side surface 11c. Further, in step S17, ends at the side of side surfaces 21d of the counter-electrode collectors 21 as well as the side of the side surfaces 21c are removed. This makes it possible to form a battery 1B shown in Figs. 4 and 5.

### (Embodiment 2)

Next, Embodiment 2 is described. Embodiment 2 describes a laminated battery in which unit cells of batteries according to Embodiment 1 are laminated. The following gives a description with a focus on differences from Embodiment 1, and omits or simplifies a description of common features.

### [1. Brief Overview]

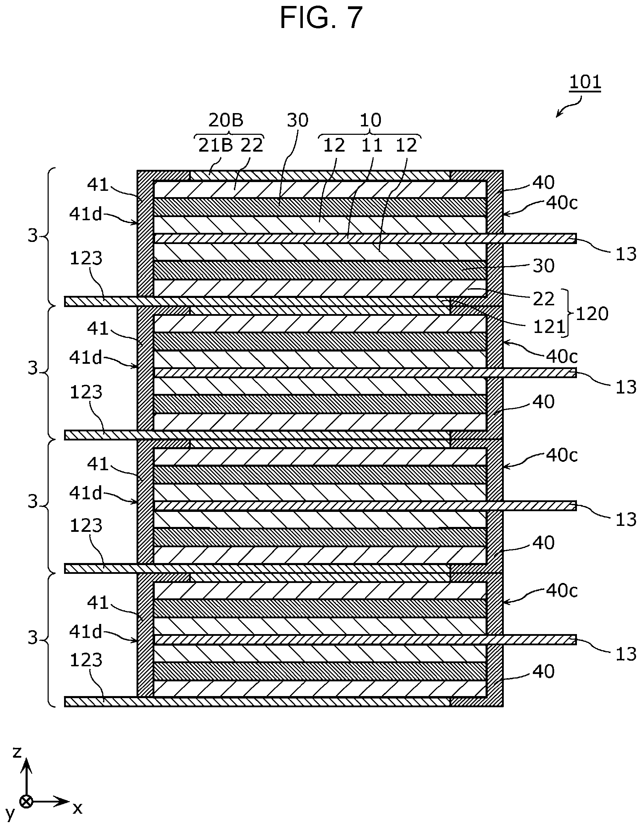

First, a configuration of a laminated battery according to Embodiment 2 is described with reference to Fig. 7. Fig. 7 is a schematic cross-sectional view showing an example of a laminated battery 101 according to the present embodiment.

As shown in Fig. 7, the laminated battery 101 includes a plurality of unit cells 3. The plurality of unit cells 3 are laminated along a direction of laminating of layers that constitute each unit cell. The plurality of unit cells 3 are electrically connected in parallel to one another.

The plurality of unit cells 3 are identical in configuration to one another. Each of the unit cells 3 differs from the unit cell 2 according to Embodiment 1 in that the unit cell 3 includes counter-electrode layers 20B and 120 instead of the two counter-electrode layers 20. The counter-electrode layer 20B is identical to the counter-electrode layers 20B of the battery 1B according to Modification 2 of Embodiment 1. Further, each of the unit cells 3 includes an insulating layer 41.

The counter-electrode layer 120 includes a counter-electrode collector 121 and a counter-electrode active material layer 22. At an end of the counter-electrode collector 121, there is provided a region not covered with the counter-electrode active material layer 22. The counter-electrode collector 121 projects from an outer surface 41d of the insulating layer 41. That is, the counter-electrode collector 121 includes a projecting portion 123 that projects outward from the outer surface 41d. A region not covered with the insulating layer 41 in planar view is equivalent to the projecting portion 123.

Further, in the region of the counter-electrode collector 121 not covered with the insulating layer 41, it is easy to form counter-electrode terminals through which to take currents out of the counter-electrode layers 20B and 120, as the counter-electrode collector 121 projects further than the outer surface 41d of the insulating layer 41. Further, the provision of the insulating layer 41 reduces exposure of the electrode active material layers 12 and the counter-electrode active material layers 22. This reduces the occurrence of damage, a short circuit, or other failures due to contact of the electrode active material layers 12 and the counter-electrode active material layers 22 with other members. This makes it possible to enhance the reliability of the laminated battery 101.

In the present embodiment, the projecting portion 13 of the electrode collector 11 and the projecting portion 123 of the counter-electrode collector 121 are provided on different side surfaces of the laminated battery 101. In a case where the planimetric shape of the laminated battery 101 is a rectangle, the side surface on which the projecting portion 13 is provided and the side surface on which the projecting portion 123 is provided are side surfaces opposite to each other. This makes it possible to separate the projecting portion 13 and the projecting portion 123 from each other, making it possible to reduce the occurrence of a short circuit or other failures due to contact.

Further, on the side surface of the laminated battery 101 on which the projecting portion 13 of the electrode collector 11 is provided, the counter-electrode collectors 21B and 121 recede from the counter-electrode active material layers 22. This reduces the occurrence of an end face short circuit due to contact between each of the counter-electrode collectors 21B and 121 and the electrode active material layers 12 or the electrode collector 11. Further, the provision of the insulating layer 40 reduces exposure of the electrode active material layers 12 and the counter-electrode active material layers 22. This reduces the occurrence of damage, a short circuit, or other failures due to contact of the electrode active material layers 12 and the counter-electrode active material layers 22 with other members. This makes it possible to enhance the reliability of the laminated battery 101.

Although, in the example shown in Fig. 7, the number of unit cells 3 that are laminated is 4, the number may be 2 or 3 or may be larger than or equal to 5.

Two adjacent ones of the unit cells 3 do not share a collector with each other. That is, two counter-electrode collectors 21B and 121 of the same polarity are laid on top of each other. At this point in time, an adhesion layer may be provided between the collectors. It is desirable that the adhesion layer have high electrical conductivity.

Further, each of the unit cells 3 may include a counter-electrode collector 121 instead of the counter-electrode collector 21B. That is, two counter-electrode collectors 121 may be laid on top of each other.

### [2. Manufacturing Method]

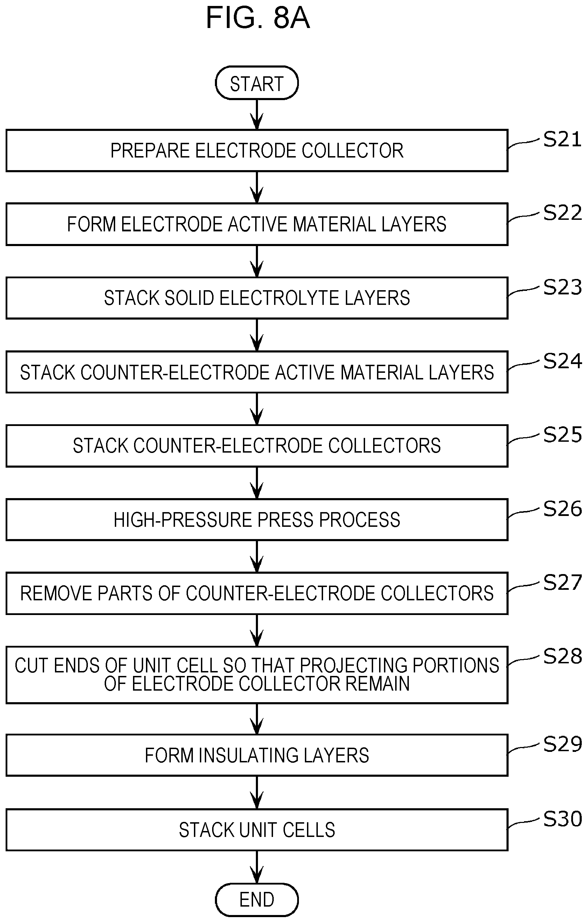

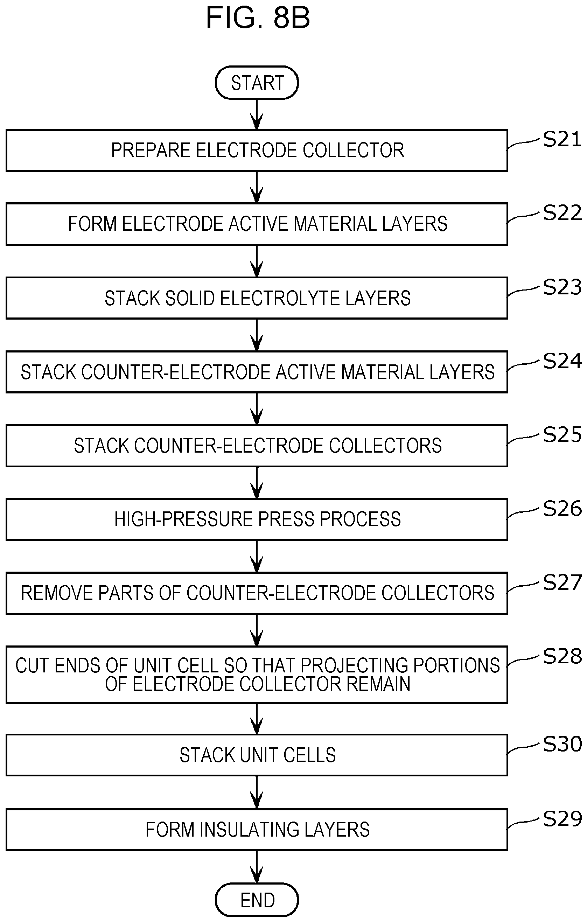

Next, a method for manufacturing a laminated battery according to the present embodiment is described with reference to flow charts shown in Figs. 8A and 8B. The method for manufacturing a laminated battery 101 as described below is an example, and the method for manufacturing a laminated battery 101 is not limited to the following example.

The method for manufacturing a laminated battery 101 includes (1) a power-generating element laminating step (steps S21 to S24), (2) a counter-electrode collector laminating step (steps S25 to S27), (3) a cutting step (step S28), (4) an insulating layer forming step (step S29), and (5) a unit cell laminating step (step S30). In each of Figs. 8A and 8B, step S28 and preceding steps constitute a process of manufacturing a unit cell. (1) The power-generating element laminating step, i.e., steps S21, S22, S23, and S24, is not described here, as these steps are identical to steps S11, S12, S13, and S14 of the manufacturing method according to Embodiment 1. The counter-electrode collector laminating step and the subsequent steps are described in detail below.

### (2) Counter-electrode Collector Laminating Step

In the counter-electrode collector laminating step, counter-electrode collectors 21B and 121 are laminated on both surfaces of the laminated polar plate in which the power-generating elements are laminated on both surfaces of the electrode collector 11 (step S25). Specifically, the counter-electrode collectors 21B is laminated on a principal surface 22a of an upper one of the counter-electrode active material layers 22. The counter-electrode collector 121 is laminated on a principal surface 22b of a lower one of the counter-electrode active material layers 22. In so doing, bonding is done by a high-pressure press process or other processes (step S26).

After this, removal of ends of the counter-electrode collectors 21B and 121 is performed so that the counter-electrode active material layers 22 become exposed at ends of a side from which the electrode collector 11 is to project (step S27). In this way, a unit cell 3 shown in Fig. 7 is formed.

At least part of the removal is performed by cutting with a knife, a laser, or a jet. In this case, parts of the counter-electrode active material layers 22, the solid electrolyte layers 30, and the electrode active material layers 12 may be simultaneously removed. Note, however, that the cutting is performed just short of the electrode collector 11 so that the electrode collector 11, which is to project, is not cut off. Alternatively, the cutting may be replaced by polishing, laser trimming, plasma etching, or chemical etching. Alternatively, the removal may be performed by a combination of these processes. The way in which the removal is performed is not limited to these processes.

Further, removal of ends of the counter-electrode collector 21B is performed so that only one counter-electrode active material layer 22 of the unit cell 3 becomes exposed at an end of a side from which the counter-electrode collector 121 is to project. In the example shown in Fig. 7, the removal of the ends of the counter-electrode collector 21B is performed so that the upper counter-electrode active material layer 22 becomes exposed. At least part of the removal is performed by cutting with a knife, a laser, or a jet. In so doing, parts of the counter-electrode active material layers 22, the solid electrolyte layers 30, and the electrode active material layers 12, and the electrode collector 11 may be simultaneously removed. Note, however, that the cutting is performed just short of the counter-electrode collector 121 so that the counter-electrode collector 121, which is to project, is not cut off. Alternatively, the cutting may be replaced by polishing, laser trimming, plasma etching, or chemical etching. Alternatively, the removal may be performed by a combination of these processes. The way in which the removal is performed is not limited to these processes.

In the counter-electrode collector laminating step, counter-electrode collectors 21B and 121 molded in advance into desired dimensions may be prepared, laminated on both surfaces of the laminated polar plate in which the power-generating elements are laminated on both surfaces of the electrode collector 11, and bonded together by a high-pressure press process or other processes. In this case, the step of removing part of the counter-electrode collector 21B or 121 (step S27) may be omitted.

### (3) Cutting Step

Next, the cutting step is described. In the cutting step, ends of the unit cell 3 are cut so that the projecting portion 13 of the electrode collector 11 and a projecting portion 123 of the counter-electrode collector 121 remain (step S28). Specifically, any part or the whole of a side other than the sides on which the projecting portion 13 is provided and the sides on which the projecting portion 123 is provided is cut with a knife, a laser, a jet, or other means.

On the side to be cut, the electrode collector 11, the electrode active material layers 12, the solid electrolyte layers 30, the counter-electrode active material layers 22, and the counter-electrode collectors 21B and 121 are laminated, and they are all cut at once. This makes it unnecessary to laminate the layers of the power-generating elements in shapes into which they have been cut, thus making it possible to easily manufacture the unit cell 3. On the side thus cut, side surfaces of the electrode collector 11, the electrode active material layers 12, the solid electrolyte layers 30, the counter-electrode active material layers 22, and the counter-electrode collectors 21B and 121 are exposed. After the cutting, the side surfaces thus exposed may be protected by placing a sealing member that covers the side surfaces. That is, in a case where the side surfaces are covered with another member such as the sealing member, the side surfaces thus exposed may be covered with another member.

### (4) Insulating Layer Forming Step

Next, the insulating layer forming step is described. In the insulating layer forming step, an insulating layer 40 is formed so as to cover the side surfaces 12c of the electrode active material layers 12, the side surfaces 30c of the solid electrolyte layers 30, the side surfaces 22c of the counter-electrode active material layers 22, and the side surfaces 21c of the counter-electrode collectors 21B and 121 at the ends of the side from which the electrode collector 11 is to project (step S29). Further, an insulating layer 41 is formed so as to cover the side surface 21d of the counter-electrode collector 21B, the side surfaces 22d of the counter-electrode active material layers 22, the side surfaces 30d of the solid electrolyte layers 30, the side surfaces 12d of the electrode active material layers 12, and the side surface 11d of the electrode collector 11 at the end of the side from which the counter-electrode collector 121 is to project. The insulating layers 40 and 41 are each placed, for example, by curing a coating of a flowable resin material. The coating is performed by inkjet or screen printing or by dipping an end face of the unit cell into the resin material. The curing is performed by drying, heating, photoirradiation, or other processes, depending on the resin material used.

Further, in forming the insulating layers 40 and 41, the projecting portion 13 of the electrode collector 11 and the projecting portion 123 of the counter-electrode collector 121 may be protected by masking with a tape or other material or resist processing so that the projecting portions 13 and 123 are not insulated. The electrical conductivity of the projecting portions 13 and 123 can be secured by, after the placement of the insulating layers 40 and 41, removing members that protect the projecting portions 13 and 123.

### (5) Unit Cell Laminating Step

Next, the unit cell laminating step is described. In the unit cell laminating step, a plurality of the unit cells 3 are laminated in the same orientation (step S30). Specifically, the unit cells 3 are bonded together so that a surface at which a counter-electrode active material layer 22 is exposed and a surface at which a counter-electrode active material layer 22 is not exposed are adjacent to each other. At this point in time, it is desirable that the unit cells 3 be laminated so as to be identical in shape and position to one another in planar view. Although the unit cells 3 are bonded together by the coating of an adhesive or the laminating of adhesive films, the way in which the unit cells 3 are bonded together is not limited to these processes. Further, the bonding may be followed by a heat-treatment or pressing step.

As shown in Fig. 8B, the step of laminating unit cells (step S30) may be followed by the step of forming insulating layers 40 and 41 (step S29).

### (Other Embodiments)

In the foregoing, a battery according to the present disclosure and a method for manufacturing the same have been described with reference to embodiments; however, the present disclosure is not intended to be limited to these embodiments. Applications to the present embodiments of various types of modification conceived of by persons skilled in the art and other embodiments constructed by combining some constituent elements of different embodiments are encompassed in the scope of the present disclosure, provided such applications and embodiments do not depart from the spirit of the present disclosure.

Although, in each of the foregoing embodiments, the battery is constituted by an electrode collector, an electrode active material layer, a solid electrolyte layer, and a counter-electrode active material layer, a counter-electrode collector, and an insulating layer, this is not intended to impose any limitation. For example, a bonding layer or other layers for reducing electric resistance and improving bonding strength may be provided between each of the layers of the battery and another.

Further, for example, in each of the foregoing embodiments, the battery may not include a collector on the counter-electrode active material layer in a case where the battery is surrounded by a chassis or substrate and a portion of the chassis or substrate functions as a collector. In other words, the counter-electrode layer may be constituted by the counter-electrode active material layer.

Further, although, in each of the foregoing embodiments, the electrode active material layer, the solid electrolyte layer, and the counter-electrode active material layer are identical in shape and position to one another in planar view, this is not intended to impose any limitation. At least one of the electrode active material layer, the solid electrolyte layer, and the counter-electrode active material layer may be different in shape or position in planar view.

Further, although, in each of the foregoing embodiments, a power-generating element is formed by sequentially laminating the electrode active material layer, the solid electrolyte layer, and the counter-electrode active material layer over the collector in the power-generating element laminating step, this is not intended to impose any limitation. For example, in the power-generating element laminating step, a power-generating element may be formed by sequentially laminating the electrode active material layer, the solid electrolyte layer, and the counter-electrode active material layer over a sheet-like substrate, and the power-generating element thus formed may be removed from the substrate and laminated on the electrode collector.

Further, each of the foregoing embodiments is subject, for example, to various changes, substitutions, additions, and omissions in the scope of the claims or the scope of equivalents thereof.

### Industrial Applicability

A battery according to the present disclosure may be used as a secondary battery such as an all-solid battery for use, for example, in various types of electronics, electrical appliances, automobiles, or other devices.

### Reference Signs List

1, 1A, 1B battery
1c, 1d, 1e, 1f, 11c, 11d, 12c, 12d, 21c, 21d, 22c, 22d, 30c, 30d side surface
2, 3 unit cell
10, 10B electrode layer
11, 11B electrode collector
11a, 11b, 22a, 22b principal surface
12 electrode active material layer
13, 14, 123 projecting portion
20, 20B, 120 counter-electrode layer
21, 21B, 121 counter-electrode collector
22 counter-electrode active material layer
30 solid electrolyte layer
40, 40A, 41 insulating layer
40c, 41d outer surface
51a, 51b, 53a, 53b region (first region)
52a, 52b, 54a, 54b region (second region)
101 laminated battery

## Claims

1. A battery comprising:
an electrode collector;
two electrode active material layers disposed on both principal surfaces of the electrode collector;
two solid electrolyte layers each disposed on a side of a corresponding one of the two electrode active material layers that is disposed on the opposite side of the electrode collector;
two counter-electrode active material layers each disposed on a side of a corresponding one of the two solid electrolyte layers that is disposed on the opposite side of the corresponding one of the two electrode active material layers;
two counter-electrode collectors each disposed on a side of a corresponding one of the two counter-electrode active material layers that is disposed on the opposite side of the corresponding one of the two solid electrolyte layers; and
a first insulating layer that covers side surfaces of the two counter-electrode collectors, the two counter-electrode active material layers, the two solid electrolyte layers, and the two electrode active material layers,
wherein
a first region not covered with any of the two electrode active material layers is provided at ends of both principal surfaces of the electrode collector,
a second region not covered with any of the two counter-electrode collectors is provided at an end of a principal surface of each of the two counter-electrode active material layers that faces toward a corresponding one of the counter-electrode collectors,
the first insulating layer covers the second region, and
the electrode collector projects from an outer surface of the first insulating layer.

2. The battery according to claim 1, wherein a length of the second region on a straight line connecting one point on an outer edge of the battery with a center of the battery and intersecting the second region in planar view is greater than or equal to 100 11m.

3. The battery according to claim 1 or 2, wherein a length of the first region on a straight line connecting one point on an outer edge of the battery with a center of the battery and intersecting the first region in planar view is greater than or equal to 1 mm.

4. The battery according to any one of claims 1 to 3, wherein a thickness of a portion of the first insulating layer that covers the second region is greater than a thickness of each of the counter-electrode collectors.

5. The battery according to any one of claims 1 to 4, wherein
each of the electrode active material layers contains a negative-electrode active material, and
each of the counter-electrode active material layers contains a positive-electrode active material.

6. The battery according to any one of claims 1 to 5, wherein
a planimetric shape of the battery is a rectangle, and
the first insulating layer is provided at least on one side of the battery in planar view.

7. The battery according to any one of claims 1 to 6, wherein
the electrode collector, the two electrode active material layers, the two solid electrolyte layers, the two counter-electrode active material layers, and the two counter-electrode collectors constitute a unit cell, and
a plurality of the unit cells are laminated.

8. The battery according to claim 7, further comprising a second insulating layer that covers ones of the side surfaces of the two counter-electrode collectors, the two counter-electrode active material layers, the two solid electrolyte layers, and the two electrode active material layers that are not covered with the first insulating layer,
wherein at least one of a plurality of the counter-electrode collectors projects from an outer surface of the second insulating layer.
